# EUROPÄISCHE PATENTSCHRIFT

(11) **EP 0 486 856 B1**
(45) Veröffentlichungstag und Bekanntmachung des Hinweises auf die Patenterteilung: **11.05.1994**
(21) Anmeldenummer: 91118579.1
(22) Anmeldetag: 31.10.1991
(51) Int. Cl.: B02C 13/286, B02C 13/04

(54) **Zerkleinerungsvorrichtung**
Grinding device
Dispositif de broyage

(30) Priorität: 19.11.1990 DE 4036833
(43) Veröffentlichungstag der Anmeldung: 27.05.1992
(73) Patentinhaber: Josef Scheppach Maschinenfabrik GmbH & Co., D-89335 Ichenhausen (DE)
(72) Erfinder: Scheppach, Fritz, W-8873 Ichenhausen (DE)
(74) Vertreter: Munk, Ludwig, Dipl.-Ing.

(56) Entgegenhaltungen:
- US-A- 4 134 554
- US-A- 4 412 659
- US-A- 4 773 601

## Beschreibung

Die Erfindung betrifft eine Vorrichtung zum Zerkleinern, insbesondere zum Zerkleinern von Gartenabfällen, mit einem mit schwenkbar angeordneten Schlegeln versehenen Hammerschlagwerk, das in einem mit einer Eingangsöffnung, die an einen Einfüllschacht anschließt, und mit einer Ausgangsöffnung, an die vorzugweise ein Auswurfschacht anschließt, versehenen Gehäuse angeordnet ist und dessen Schlegel mit einem im Bereich der Eingangsöffnung angeordneten, von ihnen durchkämmbaren Rost zusammenwirken.

Bei den bekannten Anordnungen dieser Art : (US-A-4412659 und US-A-4134554) ist der Rost so ausgebildet und angeordnet, daß das Zerkleinerungsgut von den Schlegeln des die Einfüllöffnung im wesentlichen nach unten abschließenden Hammerschlagwerks in die von ihnen durchkämmten Spalte eingezogen und dadurch zerkleinert wird. Der Rost fungiert dabei praktisch als Gegenhalterost. Nachteilig hierbei ist, daß das Zerkleinerungsmaterial keine nennenswerte Beschleunigung erfährt und daher keine brauchbare Auswurfgeschwindigkeit besitzt, was auswurfseitig zu Verstopfungen führen kann. Ein zusätzlicher Nachteil ist darin zu sehen, daß der hier als Zerkleinerungswerkzeug in Form eines Gegenhalters fungierende Rost zur Anpassung an verschiedenes Zerkleinerungsmaterial ausgetauscht werden muß, was eine umständliche Handhabung ergibt. Ein weiterer, ganz besonderer Nachteil ist aber darin zu sehen, daß hier das in den Einfüllschacht eingeworfene Zerkleinerungsmaterial zumindest teilweise direkt auf das Hammerschlagwerk fällt. Ein dosierter Einzug ist daher nicht möglich. Vielmehr sind hier hohe Beanspruchungsspitzen zu erwarten, die eine hohe Antriebsleitung erfordern, um ein Abwürgen des Antriebsmotors zu verhindern. Hinzu kommt, daß die Zwangszerkleinerung im Bereich des Rost eine vergleichsweise schwere Bauweise erforderlich macht. Die bekannten Anordnungen führen daher auch zu einem hohen Bauaufwand.

Hiervon ausgehend ist es daher die Aufgabe der vorliegenden Erfindung, eine Vorrichtung eingangs erwähnter Art mit einfachen und kostengünstigen Mitteln unter Vermeidung der Nachteile der bekannten Anordnungen so zu verbessern, daß die Zerkleinerung des eingeworfenen Materials außerhalb des Rosts erfolgt.

Diese Aufgabe wird erfindungsgemäß dadurch gelöst, daß der durch Zinken gebildete Rost von dem in Drehrichtung des Hammerschlagwerks hintenliegenden Randbereich der Eingangsöffnung ausgeht und mit seinem freien Ende einen im Bereich des in Drehrichtung vorderen Rands der Einzugsöffnung vorgesehenen Durchtrittsspalt begrenzt.

Der Rost fungiert hier in vorteilhafter Weise ausschließlich als Rückhalteorgan, welches das eingeworfene Zerkleinerungsmaterial aufnimmt und von den es durchkämmenden Schlegeln des Hammerschlagwerks sukzessive abgeräumt werden kann. Die mit ihren den Rost übergreifenden Enden auf das Zerkleinerungsmaterial auftreffenden Schlegel des Hammerschlagwerks zerschlagen das zu zerkleinernde Material dabei unter Ausnutzung der Massenträgheit des Zerkleinerungsmaterials durch Aufschlag. Ein Einzug des Zerkleinerungsmaterials in die von den Schlegeln durchkämmten Rostspalte findet nicht statt. Vielmehr wird das Zerkleinerungsmaterial hier von den Schlegeln des Hammerschlagwerks über den Rost hinweggeschoben und über den diesem benachbarten Durchtrittsspalt ungehindert abtransportiert. Das dabei durch Aufschlag zerkleinerte Material wird vergleichsweise stark beschleunigt und besitzt daher auch eine hohe Auswurfgeschwindigkeit, so daß ein tangentialer Auswurf ohne Gefahr einer auswurfseitigen Verstopfung möglich ist. Da das Zerkleinerungsmaterial lediglich durch Aufschlag zerkleinert wird und keine Zwangszerkleinerung an einem stationären Gegenhalter stattfindet, ist auch eine vergleichsweise leichte Gehäuse- und Schlagwerksbauweise möglich. Zudem können zur Bildung der Schlegel vergleichsweise dünne Laschen vorgesehen sein, die eine gewisse Messerwirkung ergeben, was sich vorteilhaft auf den Zerkleinerungseffekt auswirkt. Ein ganz besonderer Vorteil der erfindungsgemäßen Maßnahmen ist aber darin zu sehen, daß infolge der Verwendung eines Rückhalterosts, der von den Schlegeln des Hammerschlagwerks sukzessive abgeräumt werden kann, eine weitgehend kontinuierliche Arbeitsweise erreichbar ist. Die erforderliche Antriebsleistung kann daher vergleichsweise gering sein, ohne daß auch bei starkem Einwurf von Zerkleinerungsgut die Gefahr eines Abwürgens des Antriebsmotors besteht. Zudem stellt die erfindungsgemäße Bauweise sicher, daß nicht zerkleinerbare Gegenstände, wie Steine etc., bis zu einer bestimmten Größe einfach in unzerkleinertem Zustand über den Durchtrittsspalt abtransportiert werden können, was sich nicht nur vorteilhaft auf die Erzielung einer leichten Bauweise und einer geringen Antriebsleistung auswirkt, sondern auch die gesamte Anordnung schont und Betriebsunterbrechungen vorbeugt. Die erfindungsgemäßen Maßnahmen gewährleisten somit ersichtlich nicht nur eine einfache und kostengünstige Bauweise und vergleichsweise geringe Betriebskosten, sondern auch eine hohe Bedienungsfreundlichkeit und lange Lebensdauer. Es ergibt sich daher eine hohe Gesamtwirtschaftlichkeit.

In vorteilhafter Weiterbildung der übergeordneten Maßnahmen kann das das Hammerschlagwerk umfassende Gehäuse eine den in Drehrichtung vorderen, unteren Rand des Einfüllschachts hinterschneidende, kammerförmige Ausbuchtung aufweisen, die zweckmäßig bis auf das Niveau des dem Durchtrittsspalt zugewandten, freien Endes des Rosts herunterreicht. Diese Fortbildung ergibt in vorteilhafter Weise einen vergleichsweise breiten Durchtrittsspalt. Hierdurch wird sichergestellt, daß vergleichsweise große Hartteile, wie vergleichsweise große Steine etc., ohne Zerkleinerung ausgeworfen werden können. Gleichzeitig ist aber sichergestellt, daß das über den Einfüllschacht eingeworfene Material nicht ohne von den Schlegeln des Hammerschlagwerks wenigstens einmal erfaßt worden zu sein, durchfallen kann. Es ergibt sich daher eine hohe Zuverlässigkeit.

Eine weitere vorteilhafte Maßnahme kann darin bestehen, daß die den Rost bildenden Zinken zumindest im Bereich ihres freien, dem Durchtrittsspalt zugewandten Endes eine zum äußeren Pflugkreis der Schlegel parallele Oberseitenkonfiguration aufweisen. Diese Maßnahme erleichtert das Abräumen des Rosts in Drehrichtung des Hammerschlagwerks.

Zweckmäßig können die den Rost bildenden Zinken so ausgebildet und angeordnet sein, daß sich ihre Oberseite auf der ganzen, in das Gehäuse eingreifenden Länge unterhalb des äußeren Flugkreises der Schlegelenden befindet. Hierdurch wird der Bildung toter Ecken wirksam vorgebeugt.

In weiterer Fortbildung der übergeordneten Maßnahmen kann der Rost eine seine Zinken tragende, vorzugsweise außerhalb des Gehäuses angeordnete Welle aufweisen, die mittels einer vorzugsweise einen feststellbaren Stellhebel aufweisenden Stelleinrichtung verschwenkbar und feststellbar ist. Hierdurch ist es möglich, den Rost im Falle einer Abnutzung der Schlegel nachzustellen bzw. den Überstand der Schlegel über die Rostoberseite in Abhängigkeit vom Zerkleinerungsmaterial einzustellen.

Eine weitere zweckmäßige Maßnahme kann darin bestehen, daß die einander benachbarten Schlegel des Hammerschlagwerks um einen gleichen, vorzugsweise 90° betragenden Umfangswinkel gegeneinander versetzt sind. Diese Maßnahme kann die kontinuierliche Abräumung des Rückhalterosts verbessern und einen besonders gleichmäßigen Lauf unter Vermeidung von Antriebsleistungsspitzen ergeben.

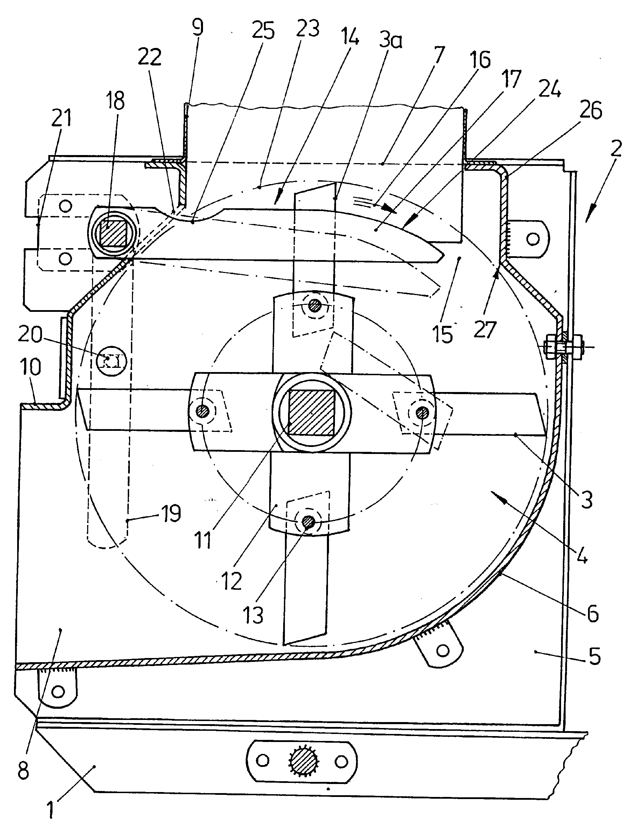

Weitere vorteilhafte Ausgestaltungen und zweckmäßige Fortbildungen der übergeordneten Maßnahmen ergeben sich aus der nachstehenden Beschreibung eines Ausführungsbeispiels anhand der Zeichnung in Verbindung mit den restlichen Unteransprüchen.

Die nachstehend beschriebene Zeichnung enthält einen Querschnitt durch einen erfindungsgemäßen Schredder zum Zerkleinern von Gartenabfällen.

Der in der Zeichnung dargestellte Schredder besitzt ein auf einer Konsole 1 aufgenommenes, trommelförmiges Gehäuse 2, in dem sich ein mit schwenkbaren Schlegeln 3 versehenes Hammerschlagwerk 4 befindet. Das Gehäuse 2 enthält zwei seitliche Stirnplatten 5, die durch ein hieran aufgenommenes, das Hammerschlagwerk 4 umfassendes Mantelstück 6 überbrückt sind, das eine nach oben weisende Eingangsöffnung 7 und eine tangential ausmündende Ausgangsöffnung 8 aufweist. Auf den flanschartigen Rand der Eingangsöffnung 7 ist ein Einfüllschacht 9 aufgesetzt. Im Bereich der Ausgangsöffnung 8 ist ein Auswurfschacht 10 angeformt.

Das Hammerschlagwerk 4 besteht aus einer durchgehenden, an den Stirnplatten 5 gelagerten Welle 11 mit mehreckigem, hier viereckigem, Querschnitt, auf die mehrere, nebeneinander angeordnete, hier um jeweils 90° gegeneinander versetzte, gabelförmige Schlegelhalter 12 aufgesteckt sind, auf denen jeweils ein laschenförmiger Schlegel 3 mittels einer Schwenklagerung 13, hier in Form eines an den seitlichen Schenkeln der gabelförmigen Schlegelhalter 12 aufgenommenen Stifts und einer von diesem durchsetzten, zwischen die Schenkel des Schlegelhalters 12 eingreifenden Büchse, schwenkbar angeordnet sind. Die Welle 11 kann im Bereich eines Endes mit einem außerhalb des Gehäuses 2 angeordneten Antriebsrad versehen sein, das mittels eines Antriebsmotors antreibbar ist. Die Antriebseinrichtung ist jedoch nicht dargestellt. Die schwenkbaren Schlegel 3 werden im Betrieb durch die an ihnen angreifenden Zentrifugalkräfte ausgestellt, können jedoch beim Auftreffen auf ein Hindernis ausweichen, wie in der Zeichnung rechts durch strichpunktierte Linien angedeutet ist.

Im Bereich der Eingangsöffnung 7 ist ein die Welle 11 übergreifender Rost 14 vorgesehen, der vom in Drehrichtung des Hammerschlagwerks hinteren Randbereich der Eingangsöffnung 7 ausgehend die Eingangsöffnung 7 und damit den Mündungsquerschnitt des Zuführschachts 9 nahezu vollständig unterfaßt und der mit seinem freien Ende an einem ihm benachbarten, im Bereich des in Drehrichtung des Hammerschlagwerks 4 vorderen Rands der Eingangsöffnung 7 vorgesehenen Durchtrittsspalt 15 endet. Die Drehrichtung des Hammerschlagwerks 4 ist durch einen Richtungspfeil 16 angedeutet. Der Rost 14 wird durch voneinander beabstandete Zinken 17 gebildet, die mit ihrem hinteren Ende auf einer durchgehenden Mehrkantwelle 18 aufgenommen sind, die mittels eines Stellhebels 19 verschwenkbar ist. Hierdurch kann der Rost 14 auf- und abgeschwenkt werden, wie durch strichpunktierte Linien angedeutet ist. Der Stellhebel 19 ist mittels eines Sperrstifts 20 feststellbar, wodurch der Rost 14 in der Höhe fixierbar ist. Die Mehrkantwelle 18 ist auf seitlichen Lagerlaschen 21 aufgenommen, die verstellbar an den Stirnplatten 5 des Gehäuses 2 aufgenommen sind. Die Welle 18 befindet sich im Bereich des in Drehrichtung hinteren Rands der Eingangsöffnung 7 außerhalb des das Hammerschlagwerk 4 umfassenden Mantelstücks 6. Dieses ist dementsprechend mit einem Fenster 22 versehen, durch welches die den Rost 14 bildenden Zinken 17 in die dem Hammerschlagwerk 4 zugeordnete Gehäusekammer hineinragen.

Der Rost 14 wird von den Schlegeln 3 des Hammerschlagwerks 4 durchkämmt, wobei die äußeren Schlegelenden über die Rostoberseite vorstehen. Die den Rost 14 bildenden Zinken 17 sind dementsprechend so angeordnet und ausgebildet, daß die Schlegel 3 durch einen jeweils zugeordneten Spalt zwischen zwei benachbarten Zinken hindurchgreifen können. Die Rosteinstellung ist so gewählt, daß der durch die Kreislinie 23 angedeutete Flugkreis der äußeren Schlegelenden 3a zumindest durchtrittsspaltseitig oberhalb der Rostoberseite verläuft. Im dargestellten Ausführungsbeispiel verläuft der Flugkreis 23 praktisch auf der gesamten in die dem Hammerschlagwerk 4 zugeordnete Gehäusekammer eingreifenden Länge der den Rost 14 bildenden Zinken 17 oberhalb der Rostoberseite.

Das über den Einfüllschacht 9 eingeworfene, zu zerkleinernde Material wird vom den Mündungsquerschnitt des Einfüllschachts 9 unterfassenden Rost 14 aufgefangen und anschließend durch die den Rost 14 überragenden Enden 3a der den Rost 14 durchkämmenden Schlegel 3 durch Aufschlag zerkleinert. Das zu zerkleinernde Material liegt dabei an keinem Gegenhalter an, sondern wird von den Schlegeln 3 lediglich unter Ausnutzung der Trägheitskräfte zerkleinert. Der als Rückhalteorgan fungierende Rost 14 wird dabei von den Schlegeln 3 des Hammerschlagwerks 4 sukzessive zum Durchtrittsspalt 15 hin abgeräumt, über den das von den Schlegeln 3 getroffene Material abtransportiert wird. Der von den Schlegeln 3 seitlich abräumbare Rost 14 ermöglicht dementsprechend eine praktisch kontinuierliche Arbeitsweise wobei infolge des gegenseitigen Versatzes der Schlegel 3 ein weitgehend gleichmäßiger Lauf erreicht wird.

Die Rostzinken 17 werden durch Laschen gebildet, die zum freien Rostende hin so verjüngt sind, daß sich ein zum Flugkreis 23 etwa paralleler Verlauf der Zinkenoberseite ergibt, wie durch die Rundung 24 angedeutet ist. Im Bereich des hinteren Rands sind die die Zinken 17 bildenden Laschen mit einer ihre Oberseite unter den Flugkreis 23 absenkenden Randausnehmung 25 versehen. Die Schlegelenden 3a verlaufen dementsprechend auf der gesamten Eingriffslänge des Rosts 14 oberhalb der Rostoberseite, wodurch tote Ecken vermieden werden. Die die Schlegel 3 bildenden Laschen können aus vergleichsweise dünnem Bandmaterial bestehen. In der Praxis hat sich eine Dicke von etwa 4mm als ausreichend erwiesen. Die geringe Dicke der Schlegel 3 ergibt einen Messereffekt.

Zur Vergrößerung des Durchtrittsspalts 15 ist das das Hammerschlagwerk 4 umfassende Mantelstück 6 des Gehäuses 2 im Bereich des in Drehrichtung des Hammerschlagwerks 4 vorderen Rands der Eingangsöffnung 7 gegenüber derem lichten Querschnitt und dadurch auch gegenüber dem Mündungsquerschnitt des Einfüllschachts 7 nach außen erweitert. Hierzu ist das das Hammerschlagwerk 4 umfassende Mantelstück 6 im Bereich des in Drehrichtung des Hammerschlagwerks 4 vorderen Rands der Eingangsöffnung 7 mit einer diese hinterschneidenden, kammerförmigen Ausbuchtung 26 versehen. Das untere Ende dieser außerhalb des Flugkreises 23 sich befindenden Ausbuchtung 26 befindet sich etwa auf dem Niveau des freien Endes des innerhalb des Flugkreises 23 verlaufenden Rosts 14, wodurch sich ein großer lichter Querschnitt des Durchtrittsspalts 15 ergibt. Der Durchtrittsspalt 15 ist dabei gegenüber dem Mündungsquerschnitt des Einfüllschachts 9 seitlich versetzt, so daß trotz des großen lichten Querschnitts des Durchtrittsspalts 15 das über den Einfüllschacht 9 eingeworfene Material nicht direkt in den Durchtrittsspalt 15 gelangt, sondern vom Rost 14 aufgefangen und erst anschließend von den den Rost 14 abräumenden Schlegeln 3 zum Durchtrittsschacht 15 gebracht wird. Die untere Kante 27 der Ausbuchtung 26 kann dabei als Gegenkante für grobes, insbesondere holziges Material dienen, das somit bis auf den Querschnitt des Durchtrittsspalts 15 zerkleinert werden kann. Die Kante 27 kann daher verstärkt sein. Gleichzeitig führt der mit Hilfe der Ausbuchtung 26 erreichte seitliche Versatz des Durchtrittsspalts gegenüber dem Zuführschacht auch zu einer Rückschlagsicherung.

## Patentansprüche

1. Vorrichtung zum Zerkleinern, insbesondere zum Zerkleinern von Gartenabfällen, mit einem mit schwenkbar angeordneten Schlegeln (3) versehenen Hammerschlagwerk (4), das in einem mit einer Eingangsöffnung (7), auf die ein Einfüllschacht (9) aufgesetzt ist, und mit einer Ausgangsöffnung (8), an die vorzugsweise ein Auswurfschacht (10) anschließt, versehenen Gehäuse (2) angeordnet ist und dessen Schlegel (3) mit einem im Bereich der Eingangsöffnung (7) angeordneten, von ihnen durchkämmbaren Rost (14) zusammenwirken, **dadurch gekennzeichnet, daß** der durch Zinken (17) gebildete Rost (14) von dem in Drehrichtung des Hammerschlagwerks (4) hinten liegenden Randbereich der Eingangsöffnung (7) ausgeht und mit seinem freien Ende einen im Bereich des in Drehrichtung des Hammerschlagwerks (4) vorderen Rands der Eingangsöffnung (7) vorgesehenen Durchtrittsspalt (15) begrenzt.

2. Vorrichtung nach Anspruch 1, **dadurch gekennzeichnet,** **daß** ein das Hammerschlagwerk (4) umfassendes Mantelstück (6) des Gehäuses (2) im Bereich des in Drehrichtung des Hammerschlagwerks (4) vorderen Rands der Eingangsöffnung (7) eine gegenüber dem Mündungsquerschnitt des Einfüllschachts (9) nach außen versetzte, kammerförmige Ausbuchtung (26) aufweist, die vorzugsweise den in Drehrichtung des Hammerschlagwerks (4) vorderen Randbereich der Eingangsöffnung (7) hinterschneidet.

3. Vorrichtung nach Anspruch 2, **dadurch gekennzeichnet,** **daß** die Ausbuchung (26) vom Niveau des dem Durchtrittsspalt (15) zugewandten, freien Endes des Rosts (14) nach oben sich erstreckt.

4. Vorrichtung nach einem der vorhergehenden Ansprüche 2 oder 3, **dadurch gekennzeichnet, daß** die untere Kante (27) der Ausbuchtung (26) als Zerkleinerungsgegenkante für gröberes Material ausgebildet ist.

5. Vorrichtung nach einem der vorhergehenden Ansprüche, **dadurch gekennzeichnet, daß** die den Rost (14) bildenden Zinken (17) zumindest im Bereich ihres freien, dem Durchtrittsspalt (15) zugewandten Endes eine zum Flugkreis der äußeren Enden der Schlegel (3) etwa parallele Oberseitenkonfiguration aufweisen.

6. Vorrichtung nach einem der vorhergehenden Ansprüche, **dadurch gekennzeichnet, daß** sich die Oberseiten der den Rost (14) bildenden Zinken (17) auf ihrer ganzen in das Gehjäuse (2) eingreifenden Länge unterhalb des Flugkreises der äußeren Enden der Schlegel (3) befinden.

7. Vorrichtung nach einem der vorhergehenden Ansprüche, **dadurch gekennzeichnet, daß** der Rost (14) eine die Zinken (17) tragende, schwenkbare Welle (18) aufweist, die mittels einer vorzugsweise einen feststellbaren Stellhebel (19) aufweisenden Stelleinrichtung verschwenkbar und feststellbar ist.

8. Vorrichtung nach Anspruch 7, **dadurch gekennzeichnet,** **daß** die Welle (18) außerhalb des das Hammerschlagwerk (4) umfassenden Mantelstücks (6) angeordnet ist und daß die Zinken (17) ein zugeordnetes Fenster (22) des Mantelstücks (6) durchgreifen.

9. Vorrichtung nach einem der vorhergehenden Ansprüche, **dadurch gekennzeichnet, daß** die Schlegel (3) durch dünne, vorzugsweise messerförmige Laschen gebildet werden.

10. Vorrichtung nach einem der vorhergehenden Ansprüche, **dadurch gekennzeichnet, daß** die einander benachbarten Schlegel (3) des Hammerschlagwerks (4) gleichmäßig am Umfang, vorzugsweise um jeweils 90° gegeneinander versetzt sind.

## Claims

1. A comminuting device and more particularly for a device for comminuting garden rubbish, comprising a hammer beating unit (4) provided with pivotally arranged flails (3) and which is arranged in a housing (2) provided with an inlet opening (7) on which a filling hopper (9) is mounted, and with an outlet opening (8), which is preferably adjoined by an ejection passage (10), the flails (3) thereof cooperating with a grating (14) which is arranged adjacent to the inlet opening (7) and is able to be penetrated by the flails, characterized in that the grating (14) constituted by prongs (17) extends from the edge part, which is to the rear in terms of the direction of rotation of the hammer beating unit (4), of the inlet opening (7) and the free end thereof delimits a passage gap (15) provided adjacent to the edge (7), which is to the front in terms of the direction of rotation of the hammer beating unit (4).

2. The device as claimed in claim 1, characterized in that a casing member (6), surrounding the hammer beating unit (4), of the housing (2) possesses, adjacent to the edge, which is to the front in terms of the direction of rotation of the hammer beating unit (4), of the inlet opening (7), a chamber-shaped bay (26) which is outwardly offset in relation to the opening cross section of the filling hopper (9), which bay (26) preferably undercuts the edge part, which is to the front in terms of the direction of rotation of the hammer beating unit (4), of the inlet opening (7).

3. The device as claimed in claim 2, characterized in that the bay (26) extends from the level of the free end, which is directed towards the passage gap (15), of the grating (15) upwards.

4. The device as claimed in either one of the preceding claims 2 and 3, characterized in that the lower edge (27) of the bay (26) is designed in the form of an opposite comminuting edge for coarse material.

5. The device as claimed in any one of the preceding claims, characterized in that the prongs (17) constituting the grating (14) at least adjacent to their free end directed towards the passage gap (15) have a configuration of their top side which is generally parallel to the trajectory of the outer ends of the flails (3).

6. The device as claimed in any one of the preceding claims, characterized in that the top sides of the prongs (17) constituting the grating (14) are located along their entire length extending into the housing (2) below the trajectory of the outer ends of the flails (3).

7. The device as claimed in any one of the preceding claims, characterized in that the grating (14) possesses a pivotal shaft (18) bearing the prongs (17) which shaft is able to be pivoted and locked by means of a setting device which preferably has a setting lever (19) able to be set in position.

8. The device as claimed in claim 7, characterized in that the shaft (18) is arranged outside the casing member (6) surrounding the hammer beating unit (4) and in that the prongs (17) extend through an associated window (22) in the casing member (6).

9. The device as claimed in any one of the preceding claims, characterized in that the flails (3) are formed by thin slats, which are preferably knife-shaped.

10. The device as claimed in any one of the preceding claims, characterized in that the mutually adjacent flails (3) of the hammer beating unit (4) are evenly offset, preferably by respectively 90° in relation to one another, on the periphery.

## Revendications

1. Dispositif de broyage, en particulier de broyage de déchets de produits maraîchers, comportant un mécanisme à marteau (4) pourvu de battoirs (3) agencés à pivotement, le mécanisme étant agencé dans un boîtier (2) équipé d'une ouverture d'entrée (7), sur laquelle est placée une gaine de remplissage (9), et d'une ouverture de sortie (8), à laquelle se raccorde de préférence une gaine d'éjection (10), et dont les battoirs (13) coopèrent avec une grille agencée dans la zone de l'ouverture d'entrée (7) et sur laquelle les battoirs s'engrènent, caractérisé en ce que la grille (14) formée par des dents (17) part de la zone marginale de l'ouverture d'entrée (7) qui se trouve en position arrière dans la direction de rotation du mécanisme à marteau (4) et délimite, par son extrémité libre, une fente de passage (15) dans la zone du bord antérieur de l'ouverture d'entrée (7) qui se trouve à l'avant dans la direction de rotation du mécanisme à marteau (4).

2. Dispositif selon la revendication 1, caractérisé en ce qu'une pièce enveloppante (6) du boîtier (2) entourant le mécanisme à marteau (4) présente dans la zone du bord du l'ouverture d'entrée (7) en position antérieure dans la direction de rotation du mécanisme à marteau (4) une partie courbe (26) en forme de chambre décalée vers l'extérieur vis-à-vis de la section transversale d'ouverture de la gaine de remplissage (9), cette partie courbe contre-dépouillant la zone marginale de l'ouverture d'entrée (7) qui se trouve de préférence en position antérieure dans la direction de rotation du mécanisme à marteau (4).

3. Dispositif selon la revendication 2, caractérisé en ce que la partie courbe (26) s'étend vers le haut depuis le niveau de l'extrémité libre de la grille (14) tournée vers la fente de passage (15).

4. Dispositif selon l'une quelconque des revendications 2 ou 3, caractérisé en ce que l'autre bord (27) de la partie courbe (26) est conformé en contre-arête de broyage pour des matières plus grosses.

5. Dispositif selon l'une quelconque des revendications précédentes, caractérisé en ce que les dents (17) formant la grille (14) présentent, au moins dans la zone de leur extrémité libre tournée vers la fente de passage (15), une configuration supérieure plus ou moins parallèle au cercle de déplacement des extrémités externes des battoirs (3).

6. Dispositif selon l'une quelconque des revendications précédentes, caractérisé en ce que les parties supérieures des dents (17) formant la grille (14) se trouvent, sur la totalité de leur longueur s'engrenant dans le boîtier (2), en dessous du cercle de déplacement des extrémités externes des battoirs (3).

7. Dispositif selon l'une quelconque des revendications précédentes, caractérisé en ce que la grille (14) présente un arbre (18) pivotant portant les dents (17), lequel arbre peut être soumis à un pivotement et fixé à l'aide d'un dispositif de positionnement présentant de préférence un levier de réglage fixable (19).

8. Dispositif selon la revendication 7, caractérisé en ce que l'arbre (18) est agencé à l'extérieur de la pièce enveloppante (6) entourant le mécanisme à marteau (4) et les dents (17) passent à travers une fenêtre (22) de la pièce enveloppante (6) qui leur est affectée.

9. Dispositif selon l'une quelconque des revendications précédentes, caractérisé en ce que les battoirs (3) sont formés par des languettes minces, de préférence en forme de couteaux.

10. Dispositif selon l'une quelconque des revendications précédentes, caractérisé en ce que les battoirs (3) du mécanisme à marteau (4) qui sont voisins les uns des autres sont uniformément décalés de préférence respectivement de 90° sur la périphérie.
